# EUROPEAN PATENT APPLICATION

(11) **EP 2 562 523 A1**
(43) Date of publication of application: **27.02.2013**
(21) Application number: 12181783.7
(22) Date of filing: 24.08.2012
(51) Int. Cl.: G01L 3/24, B62M 6/50, B62K 25/08

(54) **Input performance measurement system for a bicycle**

(30) Priority: 24.08.2011 NL 2007295
(71) Applicant: Tacx B.V., 2241 BW Wassenaar (NL)
(72) Inventor: Tacx, Johannes Jacobus Hubertus, 2241 BW Wassenaar (NL)
(74) Representative: Van Breda, Jacobus

(57) **Abstract**

Input performance measurement system (2) for a bicycle (1) comprising a drive train (3, 4) having a chain ring (3) that is mounted on a crank (5) and linked to a chain (4) that drives the bicycle's back wheel (6), and which bicycle (1) has pedals (7) that are mounted on crank arms (8) that are mounted on the crank (5), wherein the system (2) comprises at least one sensor (10) that is configured to respond to a force applied to the pedals (7) and transmitted to the chain ring (3) and to produce an electronic signal relative to said force transmitted to the chain ring (3), wherein the at least one sensor (10) is embodied with at least one electrical coil (12, 13), characterized in that the at least one coil (12, 13) is supported by a supporting device that is mounted or mountable on the chain ring (3) so as to arrange that at least one coil (12, 13) is positioned adjacent to an element (11) of the chain ring (3) and/or a crank arm (8), which element (11) is movable with respect to the at least one coil (12, 13) due to forces exerted on at least one of the pedals (7) so as to vary the electrical impedance of said at least one coil (12, 13).

## Description

The invention relates to an input performance measurement system for a bicycle.

There is abundant literature on this subject. For instance a recent proposal according to US2010/0093494 pertains to an apparatus for measuring and monitoring the torque exerted by a cyclist during pedalling, in which one or more sensor elements are applied for progressively sensing and generating signals, during rotation of the bicycle's crankshaft, which are indicative of the angular position of each crank arm of the bicycle and/or the torque applied thereto.

Another recent proposal according to EP-A-2 058 637 suggests to apply strain gauges that are mounted on each crank arm of the bicycle and provide a measure of the torque applied to each crank arm. It is also suggested to include a self-contained power, electrical circuitry, and a wireless transmitter for transmitting strain measurement information to a main controller which is equipped with a wireless transceiver for receiving data from both the left and right crank arms and possibly other devices.

Similar proposals to apply strain gauges are known from W02010/088888, WO 2011/063468 and DE-A-100 07 841. Particularly W02010/088888 provides a complicated solution having the strain gauges arranged in a bridge configuration which provides an opportunity to measure forces in different directions. WO 2011/063468 further separately applies a cadence sensor in the crank arms that cooperates with magnets mounted to the bike framing, in particular to the bike tube upright. Sensing the cadence is however no object of the instant invention.

Still another solution is known from GB-A-2 456 821 in which sensing means are applied for measuring the reaction forces from the bearing housings, and in which a temperature sensor is applied fitted to one or more bearing housings to facilitate temperature compensation of the sensing means.

It is also proposed in EP-A-1 362 552 to measure the forces exerted on the pedals and to provide an acoustic signal thereon which is indicative of these forces.

Further, DE 10 2005 027 181 A1 proposes to measure the forces exerted on the pedals by piezoelectric means.

From DE 10 2007 021 972, W02008/058164 and from US2009/0119032 an input performance measurement system for a bicycle is known, comprising a drive train having a chain ring that is mounted on a crank and linked to a chain that drives the bicycle's back wheel, and which bicycle has pedals that are mounted on crank arms that are mounted on the crank, wherein the system comprises at least one sensor that is configured to respond to a force applied to the pedals and transmitted to the chain ring and to produce an electronic signal relative to said force transmitted to the chain ring.

In the device known from DE 10 2007 021 972 a magneto-restrictive body is embedded within a crank arm, whilst also a magnetic sensor which may be provided with coils is screwed on said crank arm. This construction is disadvantageous since it requires special measures to be applied to the crank arm so that the integrity of the original crank arm is compromised.

It is an objective of the invention to do away with the at times rather complicated solutions known from the prior art, and to come up with an alternative that is reliable, robust and easy to implement. A further objective is that the alternative can be used easily with existing bicycles.

The input performance measurement system for a bicycle of the invention is having the features of one or more of the appended claims.

In a first aspect of the invention the at least one coil of the sensor is supported by a supporting device that is mounted or mountable on the chain ring so as to arrange that the at least one coil is positioned adjacent to an element of the chain ring and/or a crank arm, which element is movable with respect to the at least one coil due to forces exerted on at least one of the pedals so as to vary the electrical impedance of said at least one coil. This provides a very ingenious manner of measuring the force that is applied to the pedals, wherein the sensitivity of the measurement can be exactly matched to the requirements of the situation. One of the main advantages is that the input performance measurement system of the invention does not require adaptation of the crank arms and/or the chain ring. Within the scope of the invention it is possible to use standard crank arms and a standard chain ring, wherein the integrity of both can be maintained. This also makes possible that the input performance management system of the invention can be used easily with existing bicycles.

To promote the possibility to effect a highly sensitive and accurate measurement it is preferred that there are two coils and that the element is movable between said two coils.

Desirably the at least one coil or coils are connected to a detection circuit for measuring a response of the coil or coils due to a relative movement of the element with respect to the coil or coils that is induced by a load exerted on the pedals.

In order to discriminate between responses due to the forces applied to the pedals and to other causes (notably noise) it is preferred that the two coils are part of an electrical circuit in which the two coils are placed in series, and that the electrical circuit comprises a detection circuit for measuring a differential electrical output of said two coils.

Preferably also the two coils are loaded with a high-frequency electrical excitation source, which makes it easier to carry out the measurement in comparison with low-frequency excitation. Within the scope of this invention a high-frequency is considered to be more than 20 kHz.

Another preference is that the system includes a battery, which is preferably a rechargeable battery. This particularly makes possible to execute this input performance measurement system of the invention as an after sales replacement kit for a bicycle.

Clearly the invention is embodied in such a separately marketable input performance measurement system as well as in a bicycle that is provided with such an input performance measurement system.

The invention will hereinafter be further elucidated with reference to the drawing.

In the drawing:
- figure 1 shows a bicycle provided with an input performance measurement system in accordance with the invention;
- figure 2 shows a detail of the drivetrain of the bicycle shown in figure 1;
- figure 3 shows detail A shown in figure 2; and
- figure 4 shows schematically the electrical circuit in which the sensor coils of the system are comprised.

Whenever in the figures the same reference numerals are applied, these numerals refer to the same parts.

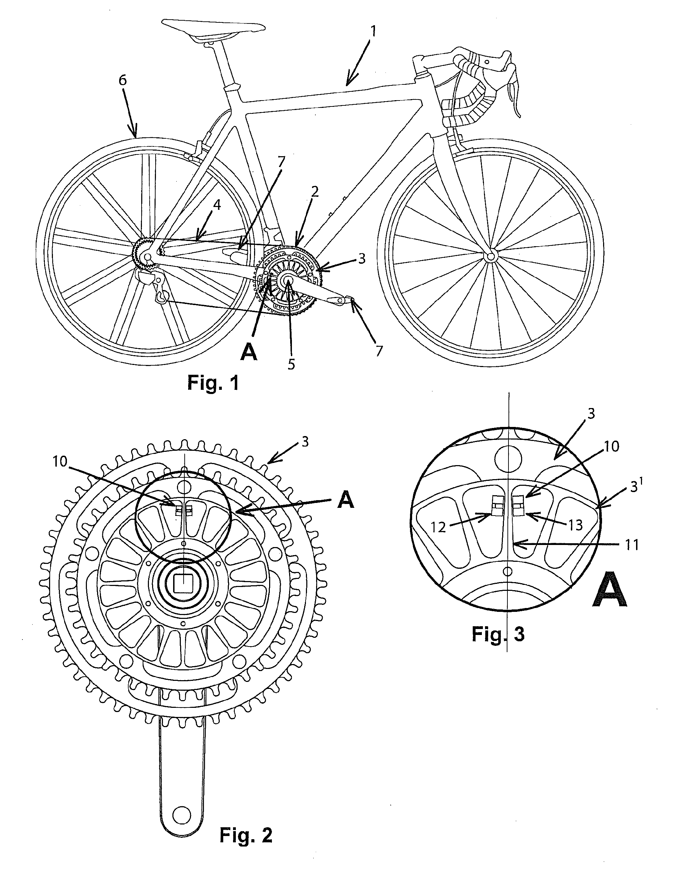

With reference first to figure 1 a bicycle 1 is shown having an input performance measurement system 2 in accordance with the invention. This input performance measurement system 2 comprises a drive train 3, 4 having a chain ring 3 (better shown in figure 2) that is mounted on a crank 5 and linked to a chain 4 that drives the bicycle's back wheel 6. Naturally the bicycle 1 has pedals 7 that are mounted on crank arms 8 that are mounted on the crank 5.

As is shown in figure 2 and in more detail in figure 3, the system comprises at least one sensor 10 that is configured to respond to a force applied to the pedals 7 and transmitted to the chain ring 3. There may also be a sensor embedded within crank arm responding to the force applied to (only) the right-hand pedal, but this sensor is optional and does not form part of the invention.

The sensor 10 of the invention responds to movement of an element 11 of the chain ring 3 caused by a force exerted on either the left-hand pedal or right-hand pedal. Based on these forces the sensor 10 provides an electronic signal relative to the forces transmitted to the chain ring 3. The sensor 10 comprises to this end at least one coil but preferably two coils 12, 13 that are supported by a supporting device 3' (preferably embodied as a ring) that is mounted or mountable on the chain ring 3 so as to arrange that at least one coil 12, 13 is positioned adjacent to an element 11 of the chain ring 3 (see figure 3; element 11 is behind the supporting device 3' for coils 12, 13). The at least one coil 12, 13 of the sensor can also be positioned adjacent to a crank arm. In both of these possible constructions the element 11 of the chain ring 3 must be movable with respect to the at least one coil 12, 13 due to forces exerted on at least one of the pedals 7 so as to vary the electrical impedance of said at least one coil 12, 13.

In all possible variants to the exemplary embodiment according to the invention it is preferable that there are two coils 12, 13 in order to improve accuracy and sensitivity.

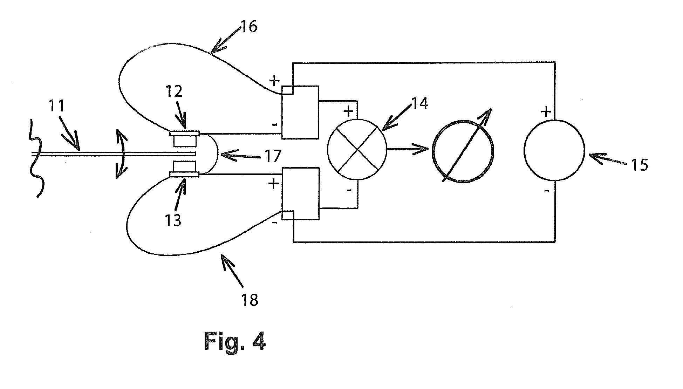

In a manner of implementation that will be clear to the person skilled in the art and which is shown in figure 4, it is preferred that the at least one coil or coils 12, 13 are connected to a detection circuit 14 for measuring a response of the coil or coils 12, 13 due to relative movement of the element 11 with respect to the coil or coils 12, 13 induced by a load exerted on the pedals 7. In this connection it is further preferred for the purpose of noise reduction that the two coils 12, 13 are part of an electrical circuit 15, 16, 17, 18 in which the two coils 12, 13 are placed in series, and wherein the electrical circuit comprises the detection circuit 14 for measuring a differential electrical output of said two coils 12, 13. Sensitivity of the system is improved by having the two coils loaded with a high-frequency electrical excitation source 15.

Desirably further the system includes a preferably rechargeable battery, which preferably is mounted on the supporting device 3', but which could also be mounted on or in the crank arm 8. The manner in which either of these variants can be implemented is obvious for the person skilled in the art and is therefore not further shown in the drawing.

Another aspect of the system of the invention is that it can be embodied as an after sales replacement kit, therewith making it possible to apply same with existing bicycles.

## Claims

1. Input performance measurement system (2) for a bicycle (1) comprising a drive train (3, 4) having a chain ring (3) that is mounted on a crank (5) and linked to a chain (4) that drives the bicycle's back wheel (6), and which bicycle (1) has pedals (7) that are mounted on crank arms (8) that are mounted on the crank (5), wherein the system (2) comprises at least one sensor (10) that is configured to respond to a force applied to the pedals (7) and transmitted to the chain ring (3) and to produce an electronic signal relative to said force transmitted to the chain ring (3), wherein the at least one sensor (10) is embodied with at least one electrical coil (12, 13), **characterized in that** the at least one coil (12, 13) is supported by a supporting device that is mounted or mountable on the chain ring (3) so as to arrange that at least one coil (12, 13) is positioned adjacent to an element (11) of the chain ring (3) and/or a crank arm (8), which element (11) is movable with respect to the at least one coil (12, 13) due to forces exerted on at least one of the pedals (7) so as to vary the electrical impedance of said at least one coil (12, 13).

2. Input performance measurement system (2) according to claim 1, **characterized in that** there are two coils (12, 13) and the element (11) is movable between said two coils (12, 13).

3. Input performance measurement system (2) according to any one of claims 1-2, **characterized in that** the at least one coil or coils (12, 13) are connected to a detection circuit for measuring a response of the coil or coils (12, 13) due to relative movement of the element (11) with respect to the coil or coils (12, 13) induced by a load exerted on the pedals (7).

4. Input performance measurement system (2) according to any one of claims 1-3, **characterized in that** the two coils (12, 13) are part of an electrical circuit in which the two coils (12, 13) are placed in series, and wherein the electrical circuit comprises a detection circuit for measuring a differential electrical output of said two coils.

5. Input performance measurement system (2) according to any one of claims 2-4, **characterized in that** the two coils (12, 13) are loaded with a high-frequency electrical excitation source.

6. Input performance measurement system (2) according to any one of the previous claims, **characterized in that** the system includes a preferably rechargeable battery.

7. Input performance measurement system (2) according to any one of the claims 1-6, **characterized in that** it is embodied as an after sales replacement kit for a bicycle (1).

8. Bicycle (1) provided with an input performance measurement system (2) according to any one of the previous claims.
